# EUROPÄISCHE PATENTSCHRIFT

(11) **EP 0 638 272 B1**
(45) Veröffentlichungstag und Bekanntmachung des Hinweises auf die Patenterteilung: **28.05.1997**
(21) Anmeldenummer: 94111675.8
(22) Anmeldetag: 27.07.1994
(51) Int. Cl.: A47J 31/46

(54) **Vorrichtung für eine Brühgetränkemaschine zum Erhitzen und Emulgieren von Flüssigkeiten**
Device for a machine for brewing drinks to heat and emulsify liquids
Dispositif pour machine à faire des boissons pour réchauffer et émulsifier des liquides

(30) Priorität: 12.08.1993 DE 4327085
(43) Veröffentlichungstag der Anmeldung: 15.02.1995
(73) Patentinhaber: Braun Aktiengesellschaft, Frankfurt am Main (DE)
(72) Erfinder: Müller, Roland, D-63303 Dreieich (DE); Littmann, Ludwig, D-61476 Kronberg (DE)

(56) Entgegenhaltungen:
- DE-A- 3 538 041
- DE-A- 3 942 169
- DE-U- 8 806 220
- FR-A- 2 638 083
- GB-A- 677 793

## Beschreibung

Die Erfindung betrifft eine Vorrichtung für eine Brühgetränkemaschine zum Erhitzen und Emulgieren von Flüssigkeiten, insbesondere für die Zubereitung des Milch-Kaffee-Getränks "Cappuccino", mit einem Rohr und mit einer sich daran anschließenden Düse, aus deren Austrittsöffnung Heißdampf austritt, wobei letzterer sich mit Luft aus der Umgebung vermischt, und wobei das so hergestellte Dampfluftgemisch dann, wenn die Austrittsöffnung der Düse in geringem Abstand zur Oberfläche der Flüssigkeit gehalten wird, in die Milch eindringt und diese aufschäumt.

Eine derartige Vorrichtung wird beispielsweise bei der Espressomaschine mit der Bezeichnung "coffee GAGGIA" von der Firma BREVETTI GAGGIA S.p.A. in Robecco S/Naviglio (MI) verwendet. Dabei besteht die Vorrichtung aus einem mit dem Dampferhitzer der Espressomaschine verbundenen Dampfrohr, an dessen Ende eine Düse mit einer Austrittsöffnung ausgebildet ist.

Zum Aufschäumen und Erwärmen von Milch muß eine Bedienungsperson die Austrittsöffnung der Düse in einem bestimmten Abstand von der Oberfläche der Milch halten, damit möglichst viel Luft in die Milch eingebracht wird, die dann in Form von Luftbläschen in der Milch eingeschlossen bleibt. Welcher Abstand allerdings dabei eingehalten werden soll, kann nur durch mehrere Versuche in etwa ermittelt werden.

Wird nämlich die Austrittsöffnung der Düse zu tief in die Milch eingetaucht, so wird überhaupt keine Luft in die Milch eingebracht und der Dampf kondensiert lediglich zu Wasser in der Milch und gibt dabei seine Wärme an die Milch ab. Wird andererseits die Austrittsöffnung der Düse in allzu weitem Abstand zur Oberfläche der Flüssigkeit gehalten, so wird auch in diesem Fall kein Milchschaum hergestellt, da das Dampf-Luft-Gemisch nicht tief genug in die Milch hineingeblasen wird, um mit der Milch zu emulgieren. In der Praxis wird also der Benutzer die Oberfläche der Milch gegenüber der Düse auf- und abbewegen, um so wenigstens ab und zu den für gute Schaumergebnisse optimalen Abstand zu erreichen, damit er einen einigermaßen guten Milchschaum erhält.

Weiterhin ist aus der DE-A1-35 38 041 eine Vorrichtung zum Erhitzen und Emulgieren von Milch bekannt, bei der der Dampfrohrabschnitt und die sich daran anschließende Düse von einem Rohr größeren Durchmessers eingeschlossen sind, die mit diesen Teilen eine Ringkammer bildet. Das Rohr ragt über die Austrittsöffnung der Düse hinaus und verjüngt sich zu ihrem Ende hin, an dem eine weitere Austrittsöffnung ausgebildet ist, die konzentrisch zur Austrittsöffnung der Düse verläuft und die im wesentlichen denselben bzw. einen geringfügig größeren Durchmesser als der Durchmesser der Düse aufweist. In Höhe der Austrittsöffnung der Düse sind am Rohr zum Ansaugen von Milch Durchlässe ausgebildet. Weit oberhalb der Düse ist am Rohr ein weiterer Durchlaß angeordnet, der als Eintritt für die Luft dient.

Diese Vorrichtung arbeitet nach einem gänzlich anderen Prinzip als die zuvor beschriebene Vorrichtung, da diese Vorrichtung beliebig tief, allerdings höchstens bis zur Höhe des oberen Durchlasses, in die Milch eingetaucht werden kann; denn bei dieser Vorrichtung handelt es sich um eine Düse nach dem Eintauchprinzip. Beim Ausströmen des Heißdampfes aus der Austrittsöffnung der Düse bildet sich nämlich in der Ringkammer ein Unterdruck, der zum einen dafür sorgt, daß über den oberen Durchlaß Luft und über die unteren Durchlässe Milch angesaugt wird, die dann von der eintretenden Luft aufgeschäumt wird und anschließend aus der an der Spitze des Rohres ausgebildeten Öffnung in die Milch eindringt. Diese Vorrichtung ist nicht nur aufwendig, sondern die Milch wird auch nicht so gut aufgeschäumt, wie dies bei der zuvor beschriebenen Einfachdüse der Fall ist, da hierbei der Wirkungsgrad nicht so gut ist.

Aufgabe der Erfindung ist es daher, eine Vorrichtung für eine Brühgetränkemaschine zum Erhitzen und Emulgieren von Flüssigkeiten, insbesondere für die Zubereitung des Milch-Kaffee-Getränks "Cappuccino" der eingangs beschriebenen Art zu schaffen, die in ihrem Aufbau besonders einfach ausgestaltet ist, die sich leicht herstellen läßt und deren Handhabung bei guten Aufschäumergebnissen besonders einfach ist.

Diese Aufgabe wird erfindungsgemäß durch die kennzeichnenden Merkmale des Anspruchs 1 gelöst. Durch die am Rohr bzw. an der Düse angebrachten Mittel wird es dem Benutzer ermöglicht, einen exakt vorgegebenen Abstand zwischen der Austrittsöffnung der Düse und der Flüssigkeitsoberfläche durch Sichtkontrolle einzuhalten, so daß die Milch in äußerst kurzer Zeit wirkungsvoll aufgeschäumt und erwärmt wird, ohne daß dabei die Milch unerwünscht umherspritzt. Durch die einfache Ausgestaltung der Vorrichtung läßt sich diese aus einem einzigen Teil, vorzugsweise aus Kunststoff, herstellen. Es ist aber auch möglich, die Vorrichtung als Kokillengußteil aus Metall, vorzugsweise aus Aluminium, Messing, Edelstahl oder ähnlich gießbaren Metallwerkstoffen herzustellen.

Bei der Anwendung der erfindungsgemäßen Vorrichtung wird das mit Milch gefüllte Gefäß so nahe an die Vorrichtung herangeführt, bis die an der Vorrichtung ausgebildete Sichtkontrolle die Oberfläche der Milch berührt. Wird nun Heißdampf durch die Düse geleitet, so bildet sich in der Ringkammer ein Unterdruck, durch den über die am Rohr ausgebildeten Durchlässe Luft in die Ringkammer eindringt, die sich mit dem Heißdampf vermischt. Das so hergestellte Luft-Dampf-Gemisch wird unter Druck in die Milch eingeleitet, wo es unter Abgabe von Wärme feine Luftblasen bildet, die in der Milch eingeschlossen bleiben, so daß Milchschaum entsteht. Durch die Tatsache, daß eine Bedienungsperson den Abstand der Austrittsöffnung der Düse zur Oberfläche der Milch mit Hilfe der Sichtkontrolle genau einhalten kann, wird die Milch optimal und in kürzester Zeit aufgeschäumt und aufgewärmt.

Durch die Weiterbildung der Erfindung nach Anspruch 2 entsteht beim Emulgiervorgang ein Strömungskreislauf der Milch, wodurch diese über die Durchlässe von außen angesaugt, mit Luft vermischt und wieder zur Milch hingeführt wird. Anschließend wird die Milch bzw. der bereits entstandene Milchschaum von außen wieder den Durchlässen zugeführt. Auf diese Weise entsteht an jedem Durchlass ein geschlossener Strömungskreislauf, durch den sich ein optimaler Emulgiervorgang bei gleichmäßiger Erwärmung der Milch-Emulsion ergibt.

Durch die Weiterbildung der Erfindung gemäß den Merkmalen des Anspruchs 3 wird mittels der gleichmäßig am Umfang am Rohr verteilten Rippen die Milch und der bereits gebildete Milchschaum den Schlitzen unter Zunahme der Strömungsgeschwindigkeit zugeführt. Dadurch, daß die Rippen radial zum Mittelpunkt der Düse verlaufen, wird auch die Milch radial von außen in Richtung auf die Düse gelenkt, wobei der zwischen zwei benachbarten Rippen liegende Raum in gewissem Grade eine Kammer bildet, die gegenüber den benachbarten Kammern abgeschottet ist. Dies führt in gewissem Grade zu einer Strömungsberuhigung der Milch, bevor sie über die Schlitze in die Ringkammer eintritt. Obwohl die Rippen nicht in die Milch eintauchen, wird beim Emulgiervorgang die Milch in eine derartig kreisförmige Strömung versetzt, daß der aufsteigende Milchstrom an der Oberfläche rund um die Vorrichtung Wellenberge erzeugt, die in die jeweils durch zwei benachbarte Rippen gebildete Kammer von außen kreisförmig eintauchen.

Bei einer Einrichtung gemäß den Merkmalen des Anspruchs 4 ergibt sich eine besonders einfache Sichtkontrolle, indem die bündig mit der Vorderseite am offenen Ende des Rohres abschließenden Stirnseiten der Rippen senkrecht zur Längsachse der Vorrichtung, also im Aufschäumbetrieb in etwa parallel zur Oberfläche der Milch verlaufen. Der Vorteil dieser Anordnung an der Vorrichtung ergibt sich im Betrieb, vorausgesetzt, daß die Vorrichtung immer so am Dampfrohr der Brühgetränkemaschine befestigt ist, daß die Vorderseite des Rohres und die Stirnseite der Rippen stets waagerecht verlaufen; denn dann verläuft, gleichgültig wie eine Bedienungsperson das Gefäß hält, die im Gefäß befindliche Flüssigkeit immer parallel zur Stirnseite der Rippen. Dies vereinfacht die Handhabung der erfindungsgemäßen Vorrichtung.

Gemäß den Merkmalen des Anspruchs 5 ist die Sichtkontrolle von einer Bedienungsperson besonders einfach erkennbar, so daß die Oberfläche auf dem Niveau der Sichtkontrolle besonders leicht eingehalten werden kann. Durch die Merkmale des Anspruchs 6 ergeben sich geradlinige Konturen an den Rippen, durch die sowohl die Handhabung, die Bedienung und die Herstellung der Vorrichtung erleichtert wird.

Da bei einem besonders starken Dampfstrahl an der Düse auch ein besonders starker Mischvorgang mit großer Wellenbewegung an der Oberfläche der Milch entsteht, wird auch bei einer Einrichtung gemäß den Merkmalen des Anspruchs 7 in dem von der Düse entfernteren, oberen Bereich eine gezielte Strömungsaufteilung der Milch an den Rippen erreicht.

Mit der Weiterbildung gemäß den Merkmalen des Anspruchs 8 wird Luft sowie die bereits mit Luft durchsetzte Milch von allen Seiten über die Durchlässe von der Ringkammer angesaugt, damit der aus der Auslaßöffnung der Düse austretende Heißdampfstrahl die Luft sowie die Flüssigkeit gleichmäßig von allen Seiten erfassen kann. Dies führt zu einer besonders intensiven und gleichmäßigen Durchmischung unter Bildung von Lufteinschluß in der Milch.

Gemäß den Merkmalen des Anspruchs 9 wird die Milch besonders heftig aufgeschäumt, wobei allerdings ein Dampfdruck im Rohr vor der Düse von etwa 1 bis 2 bar, vorzugsweise 1,5 bar, Voraussetzung ist. Um dabei eine besonders hohe Austrittsgeschwindigkeit an der Auslaßöffnung der Düse zu erreichen, verjüngt sich die Bohrung am Rohr zur Düse hin von 4,8 mm auf etwa 1 mm im Durchmesser. Dabei arbeitet die Vorrichtung nach dem Prinzip einer Dampfstrahlpumpe, d.h., aufgrund der hohen Austrittsgeschwindigkeit des Dampfstrahles an der Austrittsöffnung der Düse entsteht ein Vakuum in der Ringkammer, so daß von außen her Luft und Milch über die Durchlässe in die Ringkammer eingesaugt wird. Beim Auftreffen des Dampfstrahles auf die Oberfläche der Milch wird diese dennoch nicht nennenswert auseinandergespritzt.

Gemäß den Merkmalen der Ansprüche 11 und 12 wird das Volumen der Ringkammer nur so groß gewählt, daß die über die Durchlässe einströmende Luft und Milch möglichst direkt an den Heißdampfstrahl herangeführt wird, um so eine intensive Durchmischung und Aufschäumung der Milch zu erreichen.

Durch die Weiterbildung der Erfindung gemäß den Merkmalen des Anspruchs 13 ergibt sich eine besonders einfach ausgestaltete Vorrichtung, die bei ihrer Herstellung leicht ausformbar und nach Gebrauch leicht zu reinigen ist.

Durch die Merkmale des Anspruchs 14 läßt sich die Vorrichtung mit dem mit der Getränkezubereitungsmaschine fest verbundenen Dampfrohr lösen bzw. verbinden, um so eine Reinigung zu ermöglichen.

Vorteilhafterweise besteht die Kupplungseinrichtung aus einer Clipsverbindung, wie sie beim Ankoppeln von Rohren allgemein aus dem Stand der Technik bekannt sind. Die Kupplungseinrichtung kann aber auch aus einem lösbaren Klemmsitz bestehen, wobei die Klemmung beispielsweise durch einen im Rohr befestigten, aus gummielastischem Material hergestellten O-Ring besteht, der beim Aufsetzen der Vorrichtung am Dampfrohr durch dieses derart radial vorgespannt wird, daß die Vorrichtung fest mit dem Dampfrohr verbunden ist. Dabei kann der O-Ring auch in sowohl am Rohr wie am Dampfrohr ausgebildete Ringnuten rastend eingreifen.

Ein Ausführungsbeispiel der Erfindung ist in der Zeichnung dargestellt und wird im folgenden näher erläutert. Es zeigen:
- Fig. 1: einen Längsschnitt durch die Vorrichtung gemäß der Schnittführung I-I nach Fig. 2 und
- Fig. 2: eine Draufsicht in Richtung X nach Fig. 1, also von unten her auf die Vorrichtung.

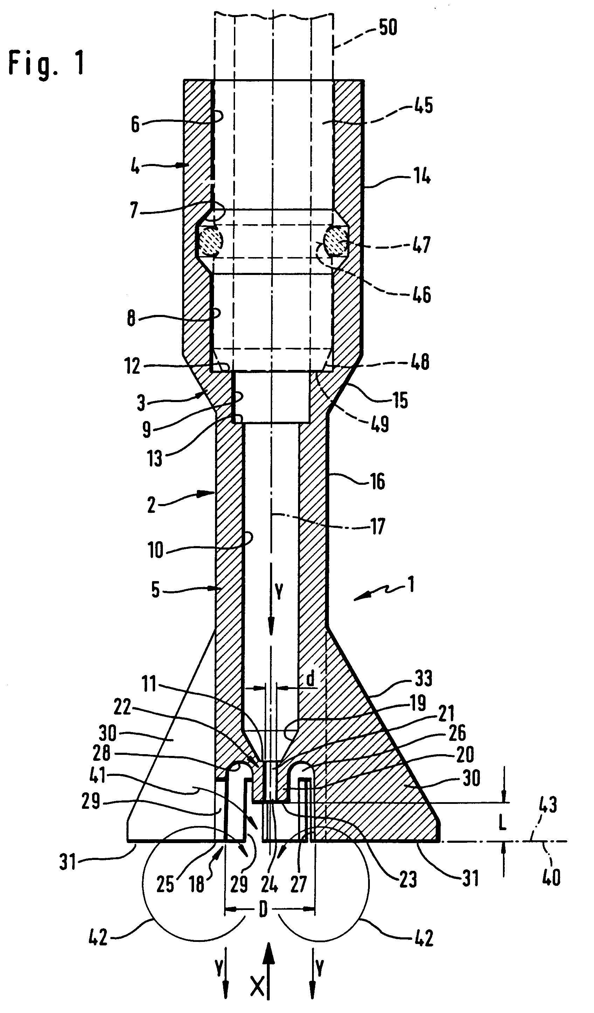

Die Vorrichtung 1 besteht nach Fig. 1 im wesentlichen aus einem im Querschnitt ringförmigen, geraden Rohr 2, das über eine entgegen der Strömungsrichtung Y des Heißdampfstrahles kegelig erweiternde Stufe 3 in einen oberen Abschnitt 4 und einen unteren Abschnitt 5 unterteilt ist. Der obere Abschnitt 4 dient zur Aufnahme eines Dampfrohres 45 (gestrichelt dargestellt), das Bestandteil einer Brühgetränkezubereitungsmaschine ist und das mit seiner Außenfläche 50 die Vorrichtung 1 über die Bohrungen 6 und 8 auf dieser zentriert. In der Bohrung 6 des oberen Abschnittes 4 ist eine Ringnut 7 ausgebildet, in der ein O-Ring 47 (gestrichelt dargestellt) befestigt ist. Auf gleicher Höhe ist am Dampfrohr 45 ebenfalls eine Ringnut 46 ausgebildet, in die der O-Ring 47 mit radialer Vorspannung eingreift, wenn das Dampfrohr 45 dichtend und fest mit der Vorrichtung 1 verbunden ist.

Um die Vorrichtung 1 vom Dampfrohr 45 zu lösen, wird die Vorrichtung 1 nach Fig. 1 einfach in Richtung Y nach unten gezogen, so daß der O-Ring 47 in die Ringnut 7 gedrückt wird und die Außenfläche 50 an ihm entlang gleiten kann. Der O-Ring 47 bildet mit den Ringnuten 7, 46 die Kupplungseinrichtung für die Vorrichtung 1. Um die Vorrichtung 1 wieder auf das Dampfrohr 45 aufschieben zu können, weist das Dampfrohr 45 an seinem freien Ende eine Fase 48 auf, die den O-Ring 47 beim Aufschieben radial nach außen drückt. In Endstellung schlägt die Stirnseite 49 des Dampfrohres 45 an der Stufe 12 der Vorrichtung 1 an.

An die Bohrung 6 schließen sich in Strömungsrichtung Y nach Fig. 1 drei Bohrungen 8, 9, 10 an, die sich jeweils über eine Stufe 12 und 13 verjüngen. Die Bohrungen 8, 9 und 10 verlaufen konzentrisch zu den Mantelflächen 14, 15 und 16 des Rohres 2, so daß diese eine gemeinsame Achse 17 haben.

In Strömungsrichtung Y schließt sich nach Fig. 1 an die Bohrung 10 oberhalb und in Nähe des offenen Endes 18 des Rohres 2 eine zum offenen Ende 18 hin gerichtete, kegelig sich verjüngende Stufe 19 an, an die sich weiterhin ein Rohrabschnitt 20 kleineren Durchmessers anschließt, der mit einer Durchgangsbohrung 21 versehen ist, die den Durchmesser d aufweist. Die Durchgangsbohrung 21 bildet die Düse 22 der Vorrichtung 1, an deren stirnseitigem Ende 23 die Austrittsöffnung 24 ausgebildet ist. Der Rohrabschnitt 20 verläuft mit seiner Durchgangsbohrung 21 konzentrisch zu den Bohrungen 8, 9 und 10 sowie zu den Mantelflächen 14 und 16.

Der untere Rohrabschnitt 5 verläuft in Strömungsrichtung Y über die Austrittsöffnung 24 hinaus und endet mit der Vorderseite 25, die senkrecht zur Achse 17 verläuft. Die Vorderseite 25 ist vom stirnseitigen Ende 23 der Düse 22 im Abstand L entfernt angeordnet. Die Mantelfläche 16 verläuft über den ganzen unteren Abschnitt 5 etwa auf dem gleichen Durchmesser. Etwa in Höhe des in der Zeichnung unteren Endes 11 der Stufe 19 ist eine den Rohrabschnitt 20 umgebende Ringkammer 26 ausgebildet, die in Höhe der Vorderseite 25, also am offenen Ende 18, endet. Die Innenwandung 27 der Ringkammer 26 ist im Durchmesser kleiner als der Durchmesser der Mantelfläche 16 des Rohres 2, jedoch im Durchmesser größer als der Durchmesser der Bohrung 10.

Der Boden 28 der Ringkammer 26, der etwa in Höhe des unteren Endes 11 der Stufe 19 verläuft, wird von einer umlaufenden, entgegen der Strömungsrichtung Y gekrümmten Rinne gebildet. Die Innenwandung 27 der Ringkammer 26 verläuft ebenfalls konzentrisch zur Durchgangsbohrung 21. Geringfügig oberhalb der Austrittsöffnung 24 sind am unteren Abschnitt 5 des Rohres 2 am Umfang gleichmäßig verteilte, fünf Durchlässe 29 in Form von Schlitzen ausgebildet, die bis zur Vorderseite 25, also bis zu dem offenen Ende 18 der Ringkammer 26 verlaufen. Die Durchlässe 29 weisen einen rechteckigen Querschnitt von insgesamt 50 mm² auf. Die Innenwandung 27 der Ringkammer 26 weist den Durchmesser D auf.

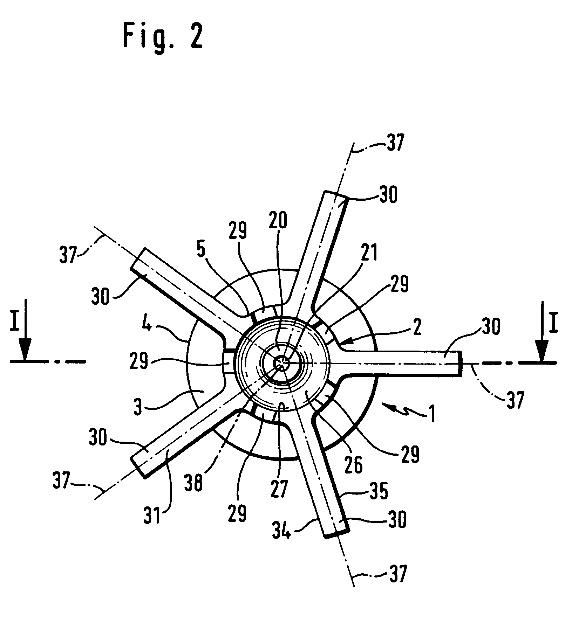

Oberhalb der Stufe 19 sind nach den Figuren 1 und 2 an die Mantelfläche 16 des unteren Abschnitts 5 im Querschnitt dreieckige Rippen 30 angeformt, deren eine die Kathete des Dreiecks bildende Stirnseite 31 bündig mit der Vorderseite 25 dies Rohres 2 abschließt. Die Hypotenuse des Dreiecks wird von der radial nach außen weisenden Außenfläche 33 gebildet. Die Seitenflächen 34, 35 der Rippen 30 verlaufen nach Fig. 2 parallel zueinander, wobei deren Mittelachsen 37 jeweils den gemeinsamen Mittelpunkt 38 der Vorrichtung 1 schneiden. Die Rippen 30 liegen mittig zu jedem Schlitz 29, so daß sich auch fünf gleichmäßig am Umfang des unteren Abschnitts 5 des Rohres 2 angeformte Rippen 30 ergeben. Die Schlitze 29 stellen eine Verbindung von außen zu der Ringkammer 26 her.

Selbstverständlich ist es auch durchaus denkbar, daß die Rippen 30 im Querschnitt eine andere Gestalt annehmen, wichtig ist nur, daß ihre Stirnseiten 31 bündig und somit horizontal zur Vorderseite 25 des Rohres 2 verlaufen. Die Vorderseite 25 bildet nach Fig. 1 mit der Stirnseite 31 der Rippen 30 das Mittel für die Sichtkontrolle 40 der Vorrichtung 1, wobei die Sichtkontrolle 40 gleichzeitig die Oberfläche 43 der Flüssigkeit, vorzugsweise Milch, im Betrieb darstellt.

Die Wirkungsweise der erfindungsgemäßen Vorrichtung ist folgnde:

Sobald die Vorrichtung 1 auf das in Fig. 1 dargestellte Dampfrohr 45 einer Brühgetränkemaschine (nicht dargestellt) aufgesteckt ist, kann nach Einschalten der Brühgetränkemaschine und späterem Betätigen eines Dampfventils (nicht dargestellt) Dampf über das Dampfrohr 45 in die Vorrichtung 1 eindringen, von wo es über die Bohrung 10 der Stufe 19 zugeführt wird. Da sich die Stufe 19 in Strömungsrichtung Y verjüngt, wird der Dampf an dieser Stelle derart beschleunigt, daß er mit hoher Geschwindigkeit durch die Durchgangsbohrung 21 der Düse 22 transportiert wird, so daß ein kräftiger und gebündelter Heißdampfstrahl an der Austrittsöffnung 24 der Düse 22 austritt.

Hat nun eine Bedienungsperson ein mit Milch gefülltes Gefäß (nicht dargestellt) so nahe an die Vorrichtung herangeführt, daß die Oberfläche (gekennzeichnet durch die gestrichelte Linie 43 in Fig. 1) der Milch die Vorderseite 25 des Rohrs 2 und die Stirnseiten 31 der Rippen 30 gerade berührt, d.h., die Sichtkontrolle 40, die beispielsweise noch farbig angelegt sein kann, ist bündig mit der Oberfläche 43 der Milch, so schießt zunächst der Dampfstrahl (nicht dargestellt) unter Bildung eines Vakuums in der Ringkammer 26 in die Milchoberfläche. Durch das in der Ringkammer 26 gebildete Vakuum strömt durch den oberen Bereich der Durchlässe 29 Luft von außen in die Ringkammer 26, die von dem Heißdampfstrahl erfaßt wird und ebenfalls in die Oberfläche der Milch eindringt. Der sich dabei ergebende Strömungsverlauf ist durch die Pfeilführung 41 in etwa angezeigt. Die in die Milch unter Turbulenz einschießende Luft wird zu kleinen Luftbläschen zerschlagen, die infolge der Zähigkeit der Milch in dieser festigehalten werden. Der Heißdampfstrahl hingegen kondensiert dabei in der Milch zu Wasser; da allerdings der Heißdampf sehr trocken ist, werden nur geringe Wasseranteile in der Milch gebunden.

Aufgrund des sehr heftigen und stetigen Einblasens des Dampf-Luft-Gemisches auf die Oberfläche der Milch bildet sich eine Strömung in der Milch, die in etwa durch die Pfeilführung 42 angezeigt wird und dies gleichmäßig an allen Schlitzen 29. Dabei wird durch die Rippen 30 die Milch von außen zu den Schlitzen 29 radial in Richtung zum Mittelpunkt 38 herangeführt. Dabei wird die Milch unter starker Beschleunigung in Strömungsrichtung Y abgelenkt, wo sie dabei mit dem Dampf-Luft-Gemisch intensiv vermischt wird.

Durch die erfindungsgemäße Vorrichtung 1 ergibt sich eine besonders einfache Handhabung beim Emulgiervorgang, durch den in kurzer Zeit besonders Milch rasch aufgeschäumt werden kann. Der dabei entstehende Schaum ist in seiner Konsistenz so fest, daß er eine außerordentlich lange Haltbarkeit erzielt.

## Patentansprüche

1. Vorrichtung für eine Brühgetränkemaschine zum Erhitzen und Emulgieren von Flüssigkeiten, insbesondere für die Zubereitung des Milch-Kaffee-Getränks "Cappuccino", mit einem Rohr (2) und mit einer sich daran anschließenden Düse (22), aus deren Austrittsöffnung (24) Heißdampf austritt, wobei letzterer sich mit Luft aus der Umgebung vermischt, und wobei das so hergestellte Dampfluftgemisch dann, wenn die Austrittsöffnung (24) der Düse (22) in geringem Abstand zur Oberfläche (40) der Flüssigkeit gehalten wird, in die Milch eindringt und diese aufschäumt,
**dadurch gekennzeichnet,**
daß die Düse (22) derart von einem Rohr (2) umgeben ist, daß um sie eine nur in Strömungsrichtung (Y) offene Ringkammer (26) entsteht, deren offenes Ende (18) sich über die Austrittsöffnung (24) der Düse (22) hinaus erstreckt, daß am Rohr (2) in Höhe der Austrittsöffnung (24) der Düse (22) Durchlässe (29) ausgebildet sind, durch die die zum Emulgieren notwendige Luft in die Ringkammer (26) eindringen kann und daß am Rohr (2) Mittel (30) angebracht sind, die es dem Benutzer ermöglichen, einen bestimmten Abstand (L) zwischen der Austrittsöffnung (24) der Düse (22) und der Flüssigkeitsoberfläche (43) durch Sichtkontrolle (31, 40) einzuhalten.

2. Vorrichtung nach Anspruch 1,
**dadurch gekennzeichnet,**
daß die Durchlässe (29) von sich bis zum offenen Ende (18) des Rohres (2) hin erstreckenden Schlitzen gebildet sind.

3. Vorrichtung nach Anspruch 2,
**dadurch gekennzeichnet,**
daß die Schlitze (29) längs der Achse (17) des Rohres (2) verlaufen und über dessen Umfang verteilt angeordnet sind und daß zwischen den Schlitzen (29) am Rohr (2) sich radial nach außen erstreckende Rippen (30) ausgebildet sind, deren Stirnseiten (31) die Mittel für die Sichtkontrolle (40) bilden.

4. Vorrichtung nach Anspruch 3,
**dadurch gekennzeichnet,**
daß die Rippen (30) bis zum offenen Ende (18) des Rohres (2) verlaufen und daß ihre jeweiligen Stirnseiten (31) dadurch, daß sie bündig mit der am offenen Ende (18) des Rohres (2) gebildeten Vorderseite (25) abschließen, die die Sichtkontrolle (31, 40) bilden.

5. Vorrichtung nach Anspruch 4,
**dadurch gekennzeichnet,**
daß die radial äußere Außenfläche (33) der Rippen (30) sich vom Rohr (2) zum offenen Ende (18) hin erweitert.

6. Vorrichtung nach Anspruch 5,
**dadurch gekennzeichnet,**
daß die Rippen (30) die Form eines rechtwinkligen Dreiecks aufweisen, deren eine Kathete (31) jeweils die Stirnseite der Rippen (30) bildet.

7. Vorrichtung nach Anspruch 3,
**dadurch gekennzeichnet,**
daß die Rippen (30) oberhalb der Schlitze (29) am Rohr (2) enden.

8. Vorrichtung nach Anspruch 3,
**dadurch gekennzeichnet,**
daß am Rohr (2) mindestens drei, vorzugsweise fünf Schlitze (29) und dementsprechend mindestens drei, vorzugsweise fünf Rippen (30) ausgebildet sind.

9. Vorrichtung nach Anspruch 4,
**dadurch gekennzeichnet,**
daß die Durchlässe (29) einen Gesamtquerschnitt von 50 mm² aufweisen, daß der Durchmesser (d) der Düse (22) etwa 1 mm und der Abstand (L) der Austrittsöffnung (24) der Düse (22) und der Vorderseite (25) des Rohres (2) etwa 3 mm betragen.

10. Vorrichtung nach Anspruch 9,
**dadurch gekennzeichnet,**
daß sich die Düse (22) über eine Stufe (19) von der Austrittsöffnung (24) entgegen der Strömungsrichtung (Y) von einem Durchmesser von ca. 1 mm auf ca. 4,8 mm konisch erweitert.

11. Vorrichtung nach Anspruch 10,
**dadurch gekennzeichnet,**
daß die Ringkammer (26) einen Boden (28) aufweist, der etwa in Höhe der Stufe (19) verläuft.

12. Vorrichtung nach Anspruch 9,
**dadurch gekennzeichnet,**
daß der Durchmesser (D) der Ringkammer (26) etwa 7 bis 8 mm beträgt.

13. Vorrichtung nach Anspruch 1,
**dadurch gekennzeichnet,**
daß das Rohr (2) die Verlängerung des Dampfrohres (45) bildet.

14. Vorrichtung nach Anspruch 1,
**dadurch gekennzeichnet,**
daß an dem der Düse (22) entgegengesetzten Ende am Rohr (2) eine Kupplungseinrichtung ausgebildet ist, die ein Ankuppeln an ein an einer Brühgetränkezubereitungsmaschine ausgebildetes Dampfrohr (45) ermöglicht.

15. Vorrichtung nach Anspruch 14,
**dadurch gekennzeichnet,**
daß die Kupplungseinrichtung aus einer Clipverbindung besteht.

16. Vorrichtung nach Anspruch 14,
**dadurch gekennzeichnet,**
daß die Kupplungseinrichtung aus einem Klemmsitz besteht.

17. Vorrichtung nach Anspruch 16,
**dadurch gekennzeichnet,**
daß der Klemmsitz aus einer in der Bohrung (6) ausgebildeten Ringnut (7) einerseits und einem in der Ringnut (7) gelagerten O-Ring (47) andererseits besteht, der beim Aufschieben der Vorrichtung (1) auf das Dampfrohr (45) der Brühgetränkemaschine in eine am Dampfrohr ausgebildete Ringnut (46) eingreift.

## Claims

1. A device for a beverage brewing machine for the heating and emulsification of liquids, in particular for the preparation of the coffee with milk beverage "Cappuccino", comprising a pipe (2) and a subsequent nozzle (22), from the orifice (24) of which nozzle hot steam exits, the latter steam mixing with the ambient air, and the so produced steam-and-air mixture penetrating into the milk and frothing it when the orifice (24) of the nozzle (22) is maintained at a small distance from the surface (40) of the liquid,
**characterized** in that the nozzle (22) is encompassed by the pipe (2) such that around it an annular chamber (26) is formed, which is open only in the direction of flow (Y), the open end (18) of the annular chamber extending beyond the orifice (24) of the nozzle (22), in that apertures (29) are formed at the pipe (2) at the level of the orifice (24) of the nozzle (22) through which the air, which is necessary for the emulsification, can enter the annular chamber (26), and in that a means (30) is fitted to the pipe (2) which permits a user maintaining a defined distance (L) between the orifice (24) of the nozzle (22) and the liquid's surface (43) by visual check (31, 40).

2. A device as claimed in claim 1,
**characterized** in that the apertures (29) are formed by slots which extend up to the open end (18) of the pipe (2).

3. A device as claimed in claim 2,
**characterized** in that the slots (29) extend alongside the axis (17) of the pipe (2) and are arranged so as to spread over its periphery, and in that radially outwardly extending ribs (30) are provided between the slots (29) at the pipe (2), the end faces (31) of which ribs form the means for the visual check (40).

4. A device as claimed in claim 3,
**characterized** in that the ribs (30) extend up to the open end (18) of the pipe (2), and in that their respective end faces (31) form the visual check means (31, 40) by ending flush with the front side (25) provided at the open end (18) of the pipe (2).

5. A device as claimed in claim 4,
**characterized** in that the radially outward outside surface (33) of the ribs (30) expands from the pipe (2) towards the open end (18).

6. A device as claimed in claim 5,
**characterized** in that the ribs (30) have the shape of a square triangle, one cathedus (31) thereof forming the end face of the ribs (30) in each case.

7. A device as claimed in claim 3,
**characterized** in that the ribs (30) end above the slots (29) at the pipe (2).

8. A device as claimed in claim 3,
**characterized** in that at least three, preferably five, slots (29) and, correspondingly, at least three, preferably five, ribs (30) are provided at the pipe (2).

9. A device as claimed in claim 4,
**characterized** in that the apertures (29) have a cross-section of 50 mm² in total, in that the diameter (d) of the nozzle (22) amounts to 1 mm approximately, and the distance (L) of the orifice (24) of the nozzle (22) from the front side (25) of the pipe (2) amounts to 3 mm approximately.

10. A device as claimed in claim 9,
**characterized** in that the nozzle (22) expands conically from roughly 1 mm to roughly 4.8 mm in diameter via a step (19) from the orifice (24) in opposition to the direction of flow (Y).

11. A device as claimed in claim 10,
**characterized** in that the annular chamber (26) has a bottom (28) which extends roughly at the level of the step (19).

12. A device as claimed in claim 9,
**characterized** in that the diameter (D) of the annular chamber (26) amounts to 7 to 8 mm approximately.

13. A device as claimed in claim 1,
**characterized** in that the pipe (2) forms the extension of the steam pipe (45).

14. A device as claimed in claim 1,
**characterized** in that, at the end opposite to the nozzle (22), a coupling arrangement is provided at the pipe (2) which permits coupling to a steam pipe (45) provided at a beverage brewing machine.

15. A device as claimed in claim 14,
**characterized** in that the coupling arrangement is a clip-on connect.

16. A device as claimed in claim 14,
**characterized** in that the coupling arrangement is a clamping seat.

17. A device as claimed in claim 16,
**characterized** in that the clamping seat includes an annular groove (7) provided in the bore (6), on the one hand, and an O-ring (47) mounted in the annular groove (7), on the other hand, which is engaged into an annular groove (46) provided on the steam pipe, when the device (1) is slipped on the steam pipe (45) of the beverage brewing machine.

## Revendications

1. Dispositif pour une machine à boissons chaudes pour chauffer et émulsionner des liquides, surtout pour la préparation du café au lait 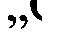 Cappuccino" comprenant un tuyau (2) et une tuyère (22) liée à l'extrémité de celui-ci, de l'orifice de sortie (24) de laquelle sort la vapeur chaude qui se mêle à l'air ambiant, le mélange d'air et de vapeur étant introduit dans le lait pour le faire écumer lorsque l'orifice de sortie (24) de la tuyère (22) se trouve à peu de distance de la surface (40) du liquide,
**caractérisé en ce que**
la tuyère (22) est entourée d'un tuyau (2) de manière à former une chambre toroïdale (26) ouverte seulement dans la direction du courant (Y) dont l'extrémité ouverte (18) s'étend au-delà de l'orifice de sortie (24) de la tuyère (22), que sur le tuyau (2) au niveau de l'orifice de sortie (24) de la tuyère (22) il y a des passages (29) à travers lesquels l'air nécessaire à l'émulsionnement peut pénétrer dans la chambre toroïdale (26) et que sur le tuyau (2) des moyens (30) sont fixés grâce auxquels l'usager est en mesure de respecter une certaine distance (L) entre l'orifice de sortie (24) de la tuyère (22) et la surface du liquide (43) avec un contrôle visuel (31, 40).

2. Dispositif selon la revendication 1,
**caractérisé en ce que**
les passages (29) sont formés par des fentes s'étendant jusqu'à l'extrémité ouverte du tuyau.

3. Dispositif selon la revendication 2
**caractérisé en ce que**
les fentes (29) passent le long de l'axe (17) du tuyau (2) et qu'elles sont disposées régulièrement sur tout son diamètre et que, entre les fentes (29) sur le tuyau (2), des nervures radiales (30) s'étendent vers l'extérieur dont les parties frontales (31) forment les moyens du contrôle visuel (40).

4. Dispositif selon la revendication 3
**caractérisé en ce que**
les nervures (30) s'étendent jusqu'à l'extrémité ouverte (18) du tuyau (2) et que les parties frontales respectives (31) constituant le contrôle visuel (31, 40) se terminent à surface plane avec la partie frontale (25) naissant à l'extrémité ouverte (18) du tuyau (2).

5. Dispositif selon la revendication 4
**caractérisé en ce que**
la surface radiale extérieure (33) des nervures (30) s'élargit du tuyau (2) vers l'extrémité ouverte (18).

6. Dispositif selon la revendication 5,
**caractérisé en ce que**
les nervures (30) ont la forme d'un triangle rectangle dont un côté (31) forme la partie frontale des nervures (30).

7. Dispositif selon la revendication 3
**caractérisé en ce que**
les nervures (30) finissent au-dessus des fentes (29) sur le tuyau (2).

8. Dispositif selon la revendication 3
**caractérisé en ce que**
sur le tuyau (2) il y a au moins trois, de préférence cinq fentes (29) et que par conséquent il y a au moins trois, de préférence cinq nervures (30).

9. Dispositif selon la revendication 4,
**caracatérisé en ce que**
les passages (29) ont une coupe transversale de 50 mm², que le diamètre (d) de la tuyère (22) est d'environ 1 mm et la distance (L) de l'orifice de sortie (24) de la tuyère (22) et de la partie frontale (25) du tuyau (2) est d'environ 3 mm.

10. Dispositif selon la revendication 9,
**caractérisé en ce que**
cette tuyère (22) s'élargit coniquement en passant par un seuil (19) de l'orifice de sortie (24) contre le courant (Y) d'un diamètre d'environ 1mm à environ 4,8 mm.

11. Dispositif selon la revendication 10,
**caractérisé en ce que**
la chambre toroïdale (26) a un fond (28) qui s'étend au niveau du seuil (19).

12. Dispositif selon la revendication 9,
**caractérisé en ce que**
le diamètre (D) de la chambre toroïdale (26) est d'environ 7 à 8 mm.

13. Dispositif selon la revendication 1,
**caractérisé en ce que**
le tuyau (2) est la prolongation du tuyau à vapeur (45).

14. Dispositif selon la revendication 1
**caractérisé en ce que**
à l'extrémité du tuyau (2) opposé à la tuyère (22) il y a un dispositif d'accouplement qui permet d'y raccorder un tuyau à vapeur (45) faisant partie d'une machine à boissons chaudes.

15. Dispositif selon la revendication 14,
**caractérisé en ce que**
le dispositif d'accouplement consiste en un raccord à clip.

16. Dispositif selon la revendication 14
**caractérisé en ce que**
le dispositif d'accouplement consiste en un ajustement pressé.

17. Dispositif selon la revendication 16
**caractérisé en ce que**
l'ajustement pressé consiste d'une rainure pour anneau de retenue (7) formée dans la perforation (6) d'une part, et d'un anneau torique (47) disposé dans une rainure pour anneau de retenue (7) d'autre part qui s'emboîte à une rainure pour anneau de retenue (46) au tuyau à vapeur lorsque le dispositif (1) est poussé sur le tuyau à vapeur (45).
